# EUROPÄISCHE PATENTSCHRIFT

(11) **EP 2 093 078 B1**
(45) Veröffentlichungstag und Bekanntmachung des Hinweises auf die Patenterteilung: **25.04.2012**
(21) Anmeldenummer: 08167782.5
(22) Anmeldetag: 29.10.2008
(51) Int. Cl.: B60C 1/00, C08K 5/54, C08K 5/37, C08L 19/00, C08L 15/00, C08J 3/20, C08L 21/00, C08L 9/06, C08K 3/00, C08K 5/00

(54) **Verfahren zur Herstellung einer Kautschukmischung**
Method for producing a rubber mixture
Procédé de fabrication d'un mélange de caoutchouc

(30) Priorität: 20.02.2008 DE 102008010111
(43) Veröffentlichungstag der Anmeldung: 26.08.2009
(73) Patentinhaber: Continental Reifen Deutschland GmbH, 30165 Hannover (DE)
(72) Erfinder: Weinreich, Dr. Hajo, 31840, Hessisch Oldendorf (DE); Müller, Dr. Norbert, 29336, Nienhagen (DE); Ohnemüller, Dr. Ulrike, 67157 Wachenheim (DE); Recker, Dr. Carla, 30167, Hannover (DE)
(74) Vertreter: Finger, Karsten

(56) Entgegenhaltungen:
- EP-A- 0 623 650
- EP-A- 0 643 098
- EP-A- 0 646 621
- EP-A- 0 708 136
- EP-A- 0 849 321
- EP-A- 0 989 161
- WO-A-02/48256
- US-A- 4 430 466
- US-A1- 2004 152 811
- US-A1- 2005 209 370

## Beschreibung

Die Erfindung betrifft ein Verfahren zur Herstellung einer Kautschukmischung mit verbessertem Verarbeitungsverhalten und optimiertem Abriebeigenschaften.

Da die Fahreigenschaften eines Reifens, insbesondere eines Fahrzeugreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten und der Füllstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. Eine Verbesserung des Nassgriffs zieht z. B. in der Regel eine Verschlechterung des Rollwiderstandes nach sich. Um den Konflikt zwischen diesen sich gegensätzlich verhaltenden Reifeneigenschaften zu entschärfen, hat sich fein verteilte gefällte Kieselsäure als Füllstoff in Kautschukmischungen mit einem Dienelastomer oder verschiedenen Dienelastomeren durchgesetzt. Der durch die Kieselsäure verbesserte Rollwiderstand geht allerdings zu Lasten des Abriebs und des Wärmeaufbaus, der das Handling des Reifens beeinflusst. Die Kieselsäure wird allein oder in Kombination mit Ruß eingesetzt.

Die Anbindung der Kieselsäure an die Polymermatrix hat großen Einfluss auf die Eigenschaften der aus solchen Mischungen hergestellten Vulkanisate. Verteilung und Anbindung lassen sich durch die Verwendung bestimmter Mischungsbestandteile und durch das Mischverfahren beeinflussen.

Im Allgemeinen erfolgt die Herstellung einer kieselsäurehaltigen Kautschukmischung in zwei Mischstufen, nämlich durch Herstellung einer Grundmischung und einer Fertigmischung. Während der Herstellung der Grundmischung werden alle Bestandteile der Mischung, wie Kautschuke, Füllstoffe, Verarbeitungshilfsmittel, Silan-Kupplungsagenzien, Alterungsschutzmittel, Ozonschutzmittel und weitere übliche Zusatzstoffe mit Ausnahme der Vulkanisationschemikalien (Schwefel, Vulkanisationsbeschleuniger, Harze u. a.), miteinander unter Energieeintrag vermischt. Dabei versucht man in der Regel, eine möglichst schnelle und gleichmäßige Verteilung der Bestandteile zu erzielen. Zur Verbesserung der Verarbeitbarkeit und um eine bessere Verteilung der Kieselsäure, die eine große spezifische hydrophile Oberfläche aufweist, in der Kautschukmischung zu erzielen, müssen in der Grundmischung in der Regel Kupplungsagenzien, vor allem in der Form von Silanen, zugesetzt werden, die gleichzeitig zur Hydrophobierung der Kieselsäureoberfläche auch in der später folgenden Vulkanisation eine chemische Anbindung an die umgebenden Kautschukmoleküle ermöglichen. Nach der Fertigstellung der Grundmischung, deren Abkühlung und eventueller Lagerung werden dann zur Herstellung der Fertigmischung die restlichen Zusatzstoffe, i. A. die Vulkanisationschemikalien, bei niedriger Temperatur eingemischt.

Zum Stand der Technik sind nun folgende Druckschriften zu würdigen:
(D1) DE 694 19 374 T2
(D2) DE 10 2005 057 801 A1
(D3) DE 699 14 033 T2
(D4) US 2004/152811 A1
(D5) US 4,430,466 B

D1 beschreibt einen Reifen mit niedrigem Rollwiderstand, bei dem ein Teil des in der Laufstreifenkautschukmischung vorliegenden Rußes durch ein thermoplastisches Verstärkungspolymer, wie Polyamid oder Polypropylen, ersetzt wird. Das verstärkende Polymer wird in einem in der Kautschukindustrie üblicherweise verwendeten Zweistufenverfahren eingemischt.

Stellvertretend für viele weitere Druckschriften sind aus D2 Kautschukmischungen bekannt, die ein oder mehrere Silane enthalten. In der D2 handelt es sich dabei um sogenannte Mercaptosilane, die eine bessere Anbindung an die Polymermatrix gewährleisten und zu einer aus umweltfreundlichen Gründen reduzierten Alkoholemission vor allem von Methanol und Ethanol führen. Es wird dabei allerdings immer von einem üblicherweise verwendeten Zweistufenverfahren ausgegangen.

D3 offenbart ein Mischverfahren zur Herstellung einer Kautschukmischung enthaltend 20 - 60 phr Polyisoprenkautschuk, 40 - 80 phr Butadienkautschuk, 40 - 80 phr Füllstoff, wobei der Füllstoff aus 20 - 60 phr Kieselsäure und 15 - 60 phr Ruß besteht, mindestens einem Kieselsäure-Haftvermittler und 0 - 10 phr Kautschuk-Verarbeitungsöl. Das Verfahren umfasst in einem ersten Schritt das Mischen der Elastomere, des Rußes und eventuell des Öls, in einer zweiten Stufe wird die Kieselsäure und der Kieselsäure-Haftvermittler und optional das Verarbeitungsöl hinzugefügt. In einer dritten Stufe werden die Schwefelvulkanisationsmittel hinzugefügt.

In D4 wird u. a. ein Verfahren zur Herstellung einer mit Kieselsäure verstärkten und schwefelwlkanisierbaren Kautschukmischung beschrieben, die ein Alkoxysilan und eine starke organische Base enthält, welche als Katalysator für die Alkoxysilan-Kieselsäure-Reaktion dient. Die derartig hergestellte Kautschukmischung zeichnet sich durch verbesserte mechanische Zugeigenschaften und dynamische viskoelastische Eigenschaften aus.

D5 beschreibt schwefelvernetzbare Kautschukmischungen, welche einen Dienkautschuk, Kieselsäure, Mercaptoalkyltrialkoxysilan als einziges Kupplungsagens und Benzothiazylsulfenamid enthalten. Die Kuastchukmischungen weisen eine verbesserte Scorchzeit, d.h. Anvernetzungsszeit auf.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Der Erfindung liegt daher die Aufgabe zugrunde, ein Verfahren zur Herstellung einer Kautschukmischung bereitzustellen, das ein verbessertes Verarbeitungsverhalten bei gleichzeitiger Optimierung der Abriebeigenschaften gewährleistet.

Gelöst wird diese Aufgabe durch ein Verfahren gemäß Kennzeichen des Anspruchs 1 welches im Folgenden näher beschrieben wird.

Bezüglich des Verfahrens findet in einer ersten Mischstufe in einem Mischer die Vermengung eines oder mehrerer Kautschuke mit wenigstens einem Mercaptosilan und mit einem oder mehreren Füllstoffen und mit einem oder mehreren Alterungsschutzmitteln, einem oder mehreren Ozonschutzwachsen und mit einem oder mehreren Weichmachern und mit einem oder mehreren anorganischen Aktivatoren und mit weiteren Prozesshilfsmitteln, sowie mit einem oder mehreren Sulfenamidbeschleunigern und / oder Thiazolbeschleunigern und mit wenigstens einem weiteren Silan statt. Die Zugabe des Vulkanisationssystems in Form von Schwefel und / oder schwefelspendenden Substanzen und einem oder mehreren weiterenVulkanisationsbeschleunigern findet in einer zweiten Mischstufe in einem Mischer statt und anschließend wird die erhaltene Kautschukfertigmischung vulkanisiert.

Einer oder mehrere Kautschuke sind dabei ausgewählt aus einer Gruppe bestehend aus natürlichem Polyisopren und / oder synthetischem Polyisopren und / oder Polyethylen und / oder Polybutadien und / oder Styrol-Butadien-Copolymer und / oder lösungspolymerisierte Styrol-Butadien-Copolymer und / oder emulsionspolymerisierte Styrol-Butadien-Copolymer und / oder Styrol-Isopren-Butadien-Terpolymer und / oder Butylkautschuk und / oder Halobutylkautschuk und / oder Isopren-Butylkautschuk und /oder Ethylen-Propylen-Dien-Kautschuk und / oder Chloropren-Kautschuk und / oder Nitrilkautschuk und / oder Fluorkautschuk und / oder Silikonkautschuk.

Bevorzugt ist, wenn zumindest ein Kautschuk ein Styrol-Butadien-Kautschuk und besonders bevorzugt ein lösungspolymerisierter Styrol-Butadien-Kautschuk ist. Zumindest ein verwendeter Kautschuk kann funktionalisiert sein. Die Funktionalisierung ist dabei mit Gruppen, die mit den verwendeten Füllstoffen, insbesondere mit OH-Gruppen tragenden Füllstoffen, wechselwirken können. Es handelt sich um eine Funktionalisierung mit Hydroxylgruppen und / oder Epoxygruppen und / oder Siloxangruppen und / oder Aminogruppen und / oder Phtalocyaningruppen.

Der Kautschuk kann auch nicht funktionalisiert sein, so dass in der Kautschukmischung entweder alle Kautschuke, ein Teil der Kautschuke oder kein Kautschuk funktionalisiert sind bzw. ist.

Das weitere Silan hat bevorzugt die allgemeine Formel Z-R¹-Sₙ-R¹-Z, worin n eine ganze Zahl von 2 bis 8 ist, worin Z ausgewählt ist aus der Gruppe bestehend aus: 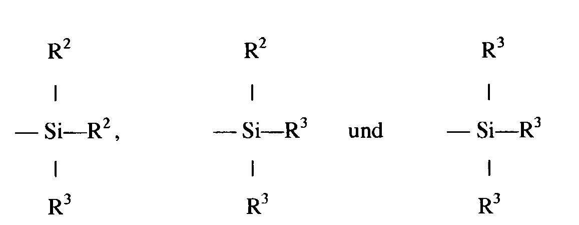 worin R² eine Alkylgruppe mit 1 bis 4 Kohlenstoffatomen, eine Cycloalkylgruppe mit 5 bis 8 Kohlenstoffatomen oder ein Phenylrest ist, wobei R² in einem Molekül gleich oder verschieden ist, R³ eine Alkoxygruppe mit 1 bis 4 Kohlenstoffatomen, eine Cycloalkoxygruppe mit 5 bis 8 Kohlenstoffatomen oder eine Phenoxygruppe ist, wobei R³ in einem Molekül gleich oder verschieden ist, wobei R1 eine substituierte oder unsubstituierte, gegebenenfalls ungesättigte, gegebenenfalls cyclische, Alkylengruppe mit insgesamt 1 bis 18 Kohlenstoffatomen oder eine substituierte oder unsubstituierte Arylengruppe mit insgesamt 6 bis 12 Kohlenstoffatomen ist und wobei die R1 in einem Molekül gleich oder verschieden ist.

Das weitere Silan kann aber auch ausgewählt werden aus den Silanen, wie Sie aus US11/617,649 und / oder US11/617,659 und / oder US11/617,663 und / oder US11/617,678 und / oder US11/617,683 bekannt sind. Es können aber auch die unter den Handelsnamen bekannten NXT- und NXT low VOC- Typen, erhältlich von Momentive Performance Materials inc., verwendet werden.

Bevorzugt ist es, wenn das weitere Silan Bis(triethoxysilylpropyl)disulfid (TESPD) ist.

Der Mengenanteil des weiteren Silans beträgt jeweils 0,5 bis 15 phr, bevorzugt 1 bis 10 phr und besonders bevorzugt 2 bis 7 phr.

Als Mercaptosilane können alle dem Fachmann bekannten Mercaptosilane eingesetzt werden. Solche Mercaptosilane können teilweise geschützt oder ungeschützt sein. Bevorzugt ist die Verwendung von Mercaptosilanen, wie sie z.B. in US20060161015 und in WO2008009514 beschrieben werden. Diese sind unter dem Handelsnamen Si363 von Evonik Industries erhältlich, es kann aber auch das unter dem Handelsnamen Si263 von Evonik Industries erhältliche Mercaptosilan verwendet werden. Es können aber auch die unter den Handelsnamen bekannten NXT-Z-Typen, erhältlich von Momentive Performance Materials inc., verwendet werden.

Der Mengenanteil des Mercaptosilans beträgt jeweils 0,5 bis 25 phr, bevorzugt 1 bis 18 phr und besonders bevorzugt 5 bis 17 phr.

Der Vulkanisationsbeschleuniger bzw. die Vulkanisationsbeschleuniger ist bzw. sind ausgewählt aus der Gruppe der Sulfenamidbeschleuniger und / oder Thiazolbeschleuniger, insbesondere der Mercaptobeschleuniger.

Bevorzugt ist, wenn der Sulfenamidbeschleuniger Benzothiazyl-2-cyclohexylsulfenamid (CBS) oder Benzothiazyl-2-tert-butylsulfenamid (TBBS) ist. Auch eine Kombination aus CBS und TBBS ist möglich.

Bevorzugt ist, wenn der Thiazolbeschleuniger, insbesondere der Mercaptobeschleuniger, 2-Mercaptobenzothiazol (MBT) oder Dibenzothiazyldisulfid (MBTS) ist. Auch eine Kombination von MBT und MBTS ist möglich.

Ebenso können CBS, TBBS, MBT und MBTS miteinander kombiniert werden.

Der weitere bzw. die weiteren Vulkanisationsbeschleuniger ist bzw. sind dabei ausgewählt aus der Gruppe enthaltend Thiurambeschleuniger und / oder Dithiocarbamatbeschleuniger und / oder Aminbeschleuniger und / oder Dithiophosphate und / oder Thioharnstoffe und / oder Guanidinbeschleuniger.

Sulfenamidbeschleuniger und Thiazolbeschleuniger, insbesondere der Mercaptobeschleuniger, sind hierbei ausgeschlossen, d.h. nicht in der Gruppe der weiteren Vulkanisationsbeschleuniger enthalten.

Es kann im Rahmen der erfindungsgemäßen Verfahren entweder ein Füllstoff oder zwei Füllstoffe eingemischt werden.

Ist der eine Füllstoff amorphe Kieselsäure, so wird diese in Mengen von 1 bis 200 phr, bevorzugt in Mengen von 20 bis 150 phr eingemischt.

Ist der eine Füllstoff Ruß, so beträgt der Mengenanteil des Rußes 1 bis 120 phr, bevorzugt 20 bis 80 phr.

Werden zwei Füllstoffe eingemischt, so handelt es sich um eine Kombination aus Kieselsäure und Ruß, deren Gesamtmenge 10 bis 250 phr beträgt.

Die Zugabe weiterer, dem Fachmann bekannter, Füllstoffe ist möglich.

Die erste Mischstufe wird in einer Zeit von 0,3 bis 20 Minuten, bevorzugt 0,5 bis 10 Minuten und besonders bevorzugt 3 bis 8 Minuten und bei einer Temperatur von 90 bis 200 °C, bevorzugt 120 bis 190°C, wiederum besonders bevorzugt bei einer Temperatur von 130 bis 170°C durchgeführt.

Die Vulkanisation der Kautschukfertigmischung wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0.4 bis 4 phr, Schwefel bevorzugt in Mengen von 1.5 bis 2.5 phr) der Kautschukmischung zugesetzt. Die mit dem beschriebenen Verfahren hergestellte Kautschukmischung findet zur Herstellung eines Reifens Verwendung. Dies kann ein Vollgummireifen, aber auch ein Fahrzeugluftreifen sein. Besonderer Einsatzschwerpunkt ist hier die Verwendung im Laufstreifen eines Fahrzeugluftreifens und in einer Body-Mischung eines Fahrzeugluftreifens. Der Begriff Body-Mischung beinhaltet hierbei Seitenwand, Innenseele, Apex, Gürtel, Schulter, Gürtelprofil, Squeege, Karkasse, Wulstverstärker und /oder Bandage.

Hohe Anforderungen an das Abriebsverhalten werden auch an Gurte und Riemen gestellt. Daher kommt die erfindungsgemäße Kautschukmischung zur Herstellung eines Gurtes oder Riemens zum Einsatz. Dies kann ein Fördergurt, bevorzugt die stark mechanisch beanspruchte Laufseite des Fördergurtes, ein Keilriemen, ein Keilrippenriemen oder ein Zahnriemen sein.

Die Erfindung wird nun anhand von Vergleichs- und Ausführungsbeispielen näher erläutert werden, ohne jedoch auf diese Beispiele beschränkt zu sein. Die Tabelle 1a zeigt jeweils das Mischverfahren und die Mischungsbestandteile auf, während die Tabelle 1b die dazugehörigen physikalischen Eigenschaften der Kautschukmischungen anhand optischer Betrachtungen und Prüfergebnissen an verschiedenen Prüfkörpern aufzeigt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Abkürzungen MS1 und MS2 stehen jeweils für Mischstufe 1und Mischstufe 2.

Die Mischungsherstellung erfolgte unter nach den obig beschriebenen Verfahren in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
• Tangens Delta nach DIN 53 513 aus Messung mit konstanter Verformungsamplitude von 0,2 % bei 10 % Vorverformung in Kompression mit 10 Hz dynamischer Verformungsfrequenz
• Abrieb bei RT gemäß DIN 53 516
• Subjektive, optische Bewertung des Kautschukfells nach Mischen und Auswalzen ( 1 = glatt (sehr gut), 5 = krümelig (ungenügend))

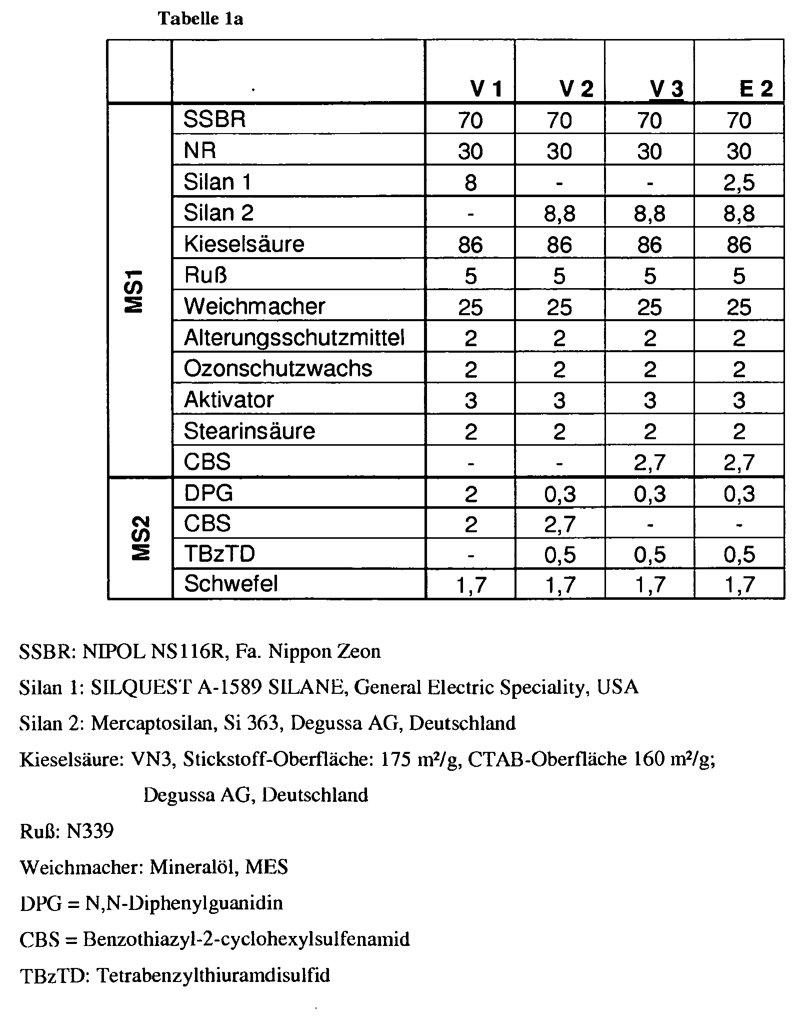

**Tabelle 1b**

| | Einheit | **V 1** | **V 2** | **V 3** | **E 2** |
|---|---|---|---|---|---|
| Felleigenschaft (opt.) | | 1 | 4,5 | 1,5 | 1 |
| Tan δ bei -15°C | | 0,74 | 0,86 | 0,85 | 0,83 |
| Tan δ bei +55 °C | | 0,166 | 0,153 | 0,155 | 0,154 |
| Abrieb | mm³ | 111 | 126 | 144 | 95 |

Aus den Ergebnissen der Tabelle 1 wird ersichtlich, dass sich durch die Zugabe von einem Mercaptosilan in Kombination mit einem Sulfenamidbeschleuniger in einer ersten Mischstufe, siehe V3, eine Verbesserung der Verarbeitung erzielen lässt. Das ausgewalzte Kautschukfell ist wesentlich glatter und somit besser verarbeitbar als durch die alleinige Zugabe von einem Mercaptosilan in eine erste Mischstufe, siehe V2. Im Vergleich zu V1 und V2 wird allerdings der Abrieb um 23% zu V1 bzw. um 11% zu V2 schlechter. Im Vergleich zu V2, welches ein Mercaptosilan ohne zusätzliche Zugabe von einem Sulfenamidbeschleuniger in einer ersten Mischstufe darstellt, verbleiben die Werte für Nassbremsen und Rollwiderstand für eine kombinierte Zugabe, siehe V3, auf gleichem Niveau. Das Nassbremsverhalten wird durch die Messung des tanδ bei -15°C dargestellt, während das Rollwiderstandsverhalten sich durch die Messung des tanδ bei +55°C darstellen lässt. Bei ersterem bedeuten höhere Werte eine Verbesserung, bei letzterem bedeuten niedrigere Werte eine Verbesserung.

Um die Nachteile im Abriebsverhalten zu korrigieren, wird zusätzlich zu einem Mercaptosilan und einem Sulfenamidbeschleuniger noch ein weiteres Silan in die erste Mischstufe hinzugegeben, siehe E2. Das Abriebsverhalten verbessert sich im Vergleich zu V1 um 17% und es findet sogar noch eine Optimierung hinsichtlich des Verarbeitungsverhaltens (Fellausbildung) statt.

## Patentansprüche

1. Verfahren zur Herstellung einer Kautschukmischung mit verbessertem Verarbeitungsverhalten, **gekennzeichnet durch** wenigstens folgende Verfahrensschritte:
- Vermengung eines oder mehrerer Kautschuke mit wenigstens einem Mercaptosilan und mit einem oder mehreren Füllstoffen und mit einem oder mehreren Alterungsschutzmitteln und mit einem oder mehreren Ozonschutzwachsen und mit einem oder mehreren Weichmachern und mit einem oder mehreren anorganischen Aktivatoren und mit weiteren Prozesshilfsmitteln, sowie mit einem oder mehreren Sulfenamidbeschleunigern und / oder Thiazolbeschleunigern und mit wenigstens einem weiteren Silan in einer ersten Mischstufe in einem Mischer;
- Zugabe des Vulkanisationssystems in Form von Schwefel und / oder schwefelspendenden Substanzen und einem oder mehreren weiteren Vulkanisationsbeschleunigern in einer zweiten Mischstufe in einem Mischer;
- anschließende Vulkanisation der Kautschukfertigmischung.

2. Verfahren nach Anspruch 1, **dadurch gekennzeichnet, dass** der Kautschuk ausgewählt ist aus einer Gruppe, bestehend aus natürlichem Polyisopren und / oder synthetischem Polyisopren und / oder Polyethylen und / oder Polybutadien und / oder Styrol-Butadien-Copolymer und / oder lösungspolymerisierte Styrol-Butadien-Copolymer und / oder emulsionspolymerisierte Styrol-Butadien-Copolymer und / oder Styrol-Isopren-Butadien-Terpolymer und / oder Butylkautschuk und / oder Halobutylkautschuk und / oder Isopren-Butylkautschuk und / oder Ethylen-Propylen-Dien-Kautschuk und / oder Chloropren-Kautschuk und / oder Nitrilkautschuk und /oder Fluorkautschuk und / oder Silikonkautschuk.

3. Verfahren nach Anspruch 2, **dadurch gekennzeichnet, dass** der Kautschuk ein Styrol-Butadien-Kautschuk ist.

4. Verfahren nach einem der Ansprüche 1 bis 3, **dadurch gekennzeichnet, dass** der Kautschuk funktionalisiert ist.

5. Verfahren nach Anspruch 4, **dadurch gekennzeichnet, dass** der Kautschuk mit Hydroxylgruppen und / oder Epoxygruppen und / oder Siloxangruppen und / oder Aminogruppen und / oder Phtalocyaningruppen funktionalisiert ist.

6. Verfahren nach einem der Ansprüche 1 bis 3, **dadurch gekennzeichnet, dass** der Kautschuk nicht funktionalisiert ist.

7. Verfahren nach einem der Ansprüche 1 bis 6, **dadurch gekennzeichnet, dass** das weitere Silan TESPD ist.

8. Verfahren nach einem der Ansprüche 1 bis 7, **dadurch gekennzeichnet, dass** der Mengenanteil des Mercaptosilans 0,5 bis 25 phr beträgt.

9. Verfahren nach einem der Ansprüche 1 bis 8, **dadurch gekennzeichnet, dass** der Mengenanteil des weiteren Silans 0,5 bis 15 phr beträgt.

10. Verfahren nach einem der Ansprüche 1 bis 9, **dadurch gekennzeichnet, dass** der Sulfenamidbeschleuniger Benzothiazyl-2-cyclohexylsulfenamid (CBS) und / oder Benzothiazyl-2-tert-butylsulfenamid (TBBS) ist.

11. Verfahren nach einem der Ansprüche 1 bis 12, **dadurch gekennzeichnet, dass** der Thiazolbeschleuniger 2-Mercaptobenzothiazol (MBT) und / oder Dibenzothiazyldisulfid (MBTS) ist.

12. Verfahren nach einem der Ansprüche 1 bis 11, **dadurch gekennzeichnet, dass** der weitere Vulkanisationsbeschleuniger ausgewählt ist aus der Gruppe enthaltend Thiurambeschleuniger und / oder Dithiocarbamatbeschleuniger und / oder Aminbeschleuniger und / oder Dithiophosphate und / oder Thioharnstoffe und / oder Guanidinbeschleuniger.

13. Verfahren nach einem der Ansprüche 1 bis 12, **dadurch gekennzeichnet, dass** ein einziger Füllstoff eingemischt wird.

14. Verfahren nach einem der Ansprüche 1 bis 13, **dadurch gekennzeichnet, dass** der Füllstoff eine amorphe Kieselsäure ist.

15. Verfahren nach Anspruch 14, **dadurch gekennzeichnet, dass** der Mengenanteil der amorphen Kieselsäure 1 bis 200 phr beträgt.

16. Verfahren nach einem der Ansprüche 1 bis 13, **dadurch gekennzeichnet, dass** der Füllstoff ein Ruß ist.

17. Verfahren nach Anspruch 16, **dadurch gekennzeichnet, dass** der Mengenanteil des Rußes 1 bis 120 phr beträgt.

18. Verfahren nach einem der Ansprüche 1 bis 12, **dadurch gekennzeichnet, dass** zwei Füllstoffe eingemischt werden.

19. Verfahren nach Anspruch 18, **dadurch gekennzeichnet, dass** die beiden Füllstoffe amorphe Kieselsäure und Ruß sind.

20. Verfahren nach Anspruch 19, **dadurch gekennzeichnet, dass** die Gesamtmenge der beiden Füllstoffe 10 bis 250 phr beträgt.

## Claims

1. Process for producing a rubber mixture with improved processing performance, **characterized by** at least the following steps:
- mixing one or more rubbers with at least one mercaptosilane and with one or more fillers and with one or more antioxidants and with one or more antiozonants and with one or more plasticizers and with one or more inorganic activators and with further processing aids, and also with one or more sulphenamide accelerators and/or thiazole accelerators and with at least one further silane in a first mixing stage in a mixer;
- addition of the vulcanization system in the form of sulphur and/or sulphur-donor substances and in the form of one or more further vulcanization accelerators in a second mixing stage in a mixer;
- subsequent vulcanization of the finished rubber mixture.

2. Process according to Claim 1, **characterized in that** the rubber is one selected from a group consisting of natural polyisoprene and/or synthetic polyisoprene and/or polyethylene and/or polybutadiene and/or styrene-butadiene copolymer and/or solution-polymerized styrene-butadiene copolymer and/or emulsion-polymerized styrene-butadiene copolymer and/or styrene-isoprene-butadiene terpolymer and/or butyl rubber and/or halobutyl rubber and/or isoprene-butyl rubber and/or ethylene-propylene-diene rubber and/or chloroprene rubber and/or nitrile rubber and/or fluoro rubber and/or silicone rubber.

3. Process according to Claim 2, **characterized in that** the rubber is a styrene-butadiene rubber.

4. Process according to any of Claims 1 to 3, **characterized in that** the rubber is a functionalized rubber.

5. Process according to Claim 4, **characterized in that** the rubber is a rubber functionalized with hydroxy groups and/or epoxy groups and/or siloxane groups and/or amino groups and/or phthalocyanine groups.

6. Process according to any of Claims 1 to 3, **characterized in that** the rubber is an unfunctionalized rubber.

7. Process according to any of Claims 1 to 6, **characterized in that** the further silane is TESPD.

8. Process according to any of Claims 1 to 7, **characterized in that** the quantitative proportion of the mercaptosilane is from 0.5 to 25 phr.

9. Process according to any of Claims 1 to 8, **characterized in that** the quantitative proportion of the further silane is from 0.5 to 15 phr.

10. Process according to any of Claims 1 to 9, **characterized in that** the sulphenamide accelerator is benzothiazyl-2-cyclohexylsulphenamide (CBS) and/or benzothiazyl-2-tert-butylsulphenamide (TBBS).

11. Process according to any of Claims 1 to 12, **characterized in that** the thiazole accelerator is 2-mercaptobenzothiazole (MBT) and/or dibenzothiazyl disulphide (MBTS).

12. Process according to any of Claims 1 to 11, **characterized in that** the further vulcanization accelerator is one selected from the group consisting of thiuram accelerators and/or dithiocarbamate accelerators and/or amine accelerators and/or dithiophosphates and/or thioureas and/or guanidine accelerators.

13. Process according to any of Claims 1 to 12, **characterized in that** a single filler is incorporated by mixing.

14. Process according to any of Claims 1 to 13, **characterized in that** the filler is an amorphous silica.

15. Process according to Claim 14, **characterized in that** the quantitative proportion of the amorphous silica is from 1 to 200 phr.

16. Process according to any of Claims 1 to 13, **characterized in that** the filler is a carbon black.

17. Process according to Claim 16, **characterized in that** the quantitative proportion of the carbon black is from 1 to 120 phr.

18. Process according to any of Claims 1 to 12, **characterized in that** two fillers are incorporated by mixing.

19. Process according to Claim 18, **characterized in that** the two fillers are amorphous silica and carbon black.

20. Process according to Claim 19, **characterized in that** the total amount of the two fillers is from 10 to 250 phr.

## Revendications

1. Procédé de fabrication d'un mélange de caoutchoucs à comportement d'usinage amélioré, **caractérisé par** au moins les étapes de procédé suivantes :
- le mélange d'un ou de plusieurs caoutchoucs avec au moins un mercaptosilane et avec une ou plusieurs charges et avec un ou plusieurs agents antivieillissement et avec une ou plusieurs cires anti-ozone et avec un ou plusieurs plastifiants et avec un ou plusieurs activateurs inorganiques et avec d'autres adjuvants de traitement, ainsi qu'avec un ou plusieurs accélérateurs sulfénamide et/ou accélérateurs thiazole et avec au moins un autre silane lors d'une première étape de mélange dans un mélangeur ;
- l'ajout du système de vulcanisation sous la forme de soufre et/ou de substances donnant du soufre et d'un ou de plusieurs autres accélérateurs de vulcanisation lors d'une seconde étape de mélange dans un mélangeur ;
- la vulcanisation ultérieure du mélange de caoutchoucs fini.

2. Procédé selon la revendication 1, **caractérisé en ce que** le caoutchouc est choisi dans un groupe constitué par le polyisoprène naturel et/ou le polyisoprène synthétique et/ou le polyéthylène et/ou le polybutadiène et/ou le copolymère styrène-butadiène et/ou le copolymère styrène-butadiène polymérisé en solution et/ou le copolymère styrène-butadiène polymérisé en émulsion et/ou le terpolymère styrène-isoprène-butadiène et/ou le caoutchouc de butyle et/ou le caoutchouc d'halobutyle et/ou le caoutchouc d'isoprène-butyle et/ou le caoutchouc d'éthylène-propylène-diène et/ou le caoutchouc de chloroprène et/ou le caoutchouc de nitrile et/ou le caoutchouc fluoré et/ou le caoutchouc de silicone.

3. Procédé selon la revendication 2, **caractérisé en ce que** le caoutchouc est un caoutchouc de styrène-butadiène.

4. Procédé selon l'une quelconque des revendications 1 à 3, **caractérisé en ce que** le caoutchouc est fonctionnalisé.

5. Procédé selon la revendication 4, **caractérisé en ce que** le caoutchouc est fonctionnalisé avec des groupes hydroxyle et/ou des groupes époxy et/ou des groupes siloxane et/ou des groupes amino et/ou des groupes phtalocyanine.

6. Procédé selon l'une quelconque des revendications 1 à 3, **caractérisé en ce que** le caoutchouc n'est pas fonctionnalisé.

7. Procédé selon l'une quelconque des revendications 1 à 6, **caractérisé en ce que** l'autre silane est le TESPD.

8. Procédé selon l'une quelconque des revendications 1 à 7, **caractérisé en ce que** la proportion du mercaptosilane est de 0,5 à 25 pce.

9. Procédé selon l'une quelconque des revendications 1 à 8, **caractérisé en ce que** la proportion de l'autre silane est de 0,5 à 15 pce.

10. Procédé selon l'une quelconque des revendications 1 à 9, **caractérisé en ce que** l'accélérateur sulfénamide est le benzothiazyl-2-cyclohexylsulfénamide (CBS) et/ou le benzothiazyl-2-tert-butylsulfénamide (TBBS).

11. Procédé selon l'une quelconque des revendications 1 à 1 2, **caractérisé en ce que** l'accélérateur thiazole est le 2-mercaptobenzothiazole (MBT) et/ou le disulfure de dibenzothiazyle (MBTS).

12. Procédé selon l'une quelconque des revendications 1 à 11, **caractérisé en ce que** l'autre accélérateur de vulcanisation est choisi dans le groupe contenant les accélérateurs thiuram et/ou les accélérateurs dithiocarbamate et/ou les accélérateurs amine et/ou les dithiophosphates et/ou les thiourées et/ou les accélérateurs guanidine.

13. Procédé selon l'une quelconque des revendications 1 à 12, **caractérisé en ce qu'**une charge individuelle est incorporée.

14. Procédé selon l'une quelconque des revendications 1 à 13, **caractérisé en ce que** la charge est une silice amorphe.

15. Procédé selon la revendication 14, **caractérisé en ce que** la proportion de la silice amorphe est de 1 à 200 pce.

16. Procédé selon l'une quelconque des revendications 1 à 13, **caractérisé en ce que** la charge est un noir de carbone.

17. Procédé selon la revendication 16, **caractérisé en ce que** la proportion du noir de carbone est de 1 à 120 pce.

18. Procédé selon l'une quelconque des revendications 1 à 12, **caractérisé en ce que** deux charges sont incorporées.

19. Procédé selon la revendication 18, **caractérisé en ce que** les deux charges sont de la silice amorphe et du noir de carbone.

20. Procédé selon la revendication 19, **caractérisé en ce que** la quantité totale des deux charges est de 10 à 250 pce.
